# EUROPÄISCHE PATENTSCHRIFT

(11) **EP 0 423 673 B1**
(45) Veröffentlichungstag und Bekanntmachung des Hinweises auf die Patenterteilung: **28.12.1994**
(21) Anmeldenummer: 90119719.4
(22) Anmeldetag: 15.10.1990
(51) Int. Cl.: H02K 11/00, H01H 9/06

(54) **Drehzahlregler für Elektromotoren von Elektrowerkzeugen**
Speed regulator for electric motors of electric tools
Régulateur de vitesse pour moteurs électriques d'outils électriques

(30) Priorität: 20.10.1989 DE 3934950
(43) Veröffentlichungstag der Anmeldung: 24.04.1991
(73) Patentinhaber: Marquardt GmbH, 78604 Rietheim-Weilheim (DE)
(72) Erfinder: Zimmermann, Bernward, Dr., W-7200 Tuttlingen (DE)
(74) Vertreter: Patentanwälte Eisele, Otten & Roth

(56) Entgegenhaltungen:
- FR-A- 2 044 636
- FR-A- 2 078 724
- GB-A- 2 061 020
- US-A- 2 843 763
- US-A- 2 980 839
- US-A- 3 386 067
- US-A- 3 463 990
- US-A- 3 641 410

## Beschreibung

Die Erfindung betrifft einen Drehzahlregler für Elektromotoren von Elektrowerkzeugen nach dem Oberbegriff des Anspruchs 1.

Elektrowerkzeuge, wie Bohrmaschinen, Bohrhämmer, Stichsägen, Schwingschleifer usw. werden seit einigen Jahren mit elektronischen Schaltern ausgerüstet, die eine stufenlose Veränderung der Drehzahl ermöglichen. Dabei wird stets über einen Drücker bzw. über ein Stellrad ein Stellglied betätigt, welches eine Änderung einer elektrischen Meßgröße bewirkt. Als Stellglied wird stets ein Potentiometer verwendet, welches als Teil des Schalters bzw. eines Elektronikmoduls ausgebildet ist. Dabei ist der Drücker bzw. das Stellrad des Schalters mit einem Potentiometer-Schleifer versehen, der durch die lineare Wegverstellung des Drückers oder die kreisförmige Wegverstellung des Rads auf einer entsprechend geformten linearen oder nicht linearen (z. B. logarithmischen) Potentiometerbahn beim Drücker oder einer kreisförmigen Potentiometerbahn beim Stellrad gleitet und eine entsprechende Widerstandsänderung bewirkt. Der jeweilige momentane Widerstandwert dient als Stellgröße für die nachfolgende Regelelektronik, die beispielweise über eine Phasenanschnittsteuerung eine Drehzahlregelung des Elektromotors bewirkt. Das Potentiometer liefert dabei als Funktion des Drückerwegs eine proportionale Spannung, einen proportionalen Strom oder einen dem Drückerweg proportionalen Widerstand.

Durch den Einsatz bedingt, werden die Potentiometer einem starken Verschleiß durch Abrieb, Staub, Vibrationen usw. unterworfen. Weiterhin lassen sich nach den heutigen Fertigungsverfahren Potentiometer in Großserien wirtschaftlich nur mit Widerstandswerten herstellen, die relativ hohe Toleranzen aufweisen. Dabei bestimmt das verwendete Trägermaterial, z. B. Hartpapier, Keramik und die verwendete Widerstandspaste im wesentlichen die Güte und den Preis des Potentiometers.

Aus der US-A-3 386 067 ist ein Drehzahlregler nach dem Oberbegriff des Anspruchs 1 bekannt geworden. Bei einem solchen Drehzahlregler für Elektromotoren von Elektrowerkzeugen ist das Stellglied als drucksensibler oder magnetfeldsensibler Sensor ausgebildet. Bei Verwendung eines Drucksensors wirkt der Drücker im wesentlichen wegfrei auf den Drucksensor ein.

Der Einsatz eines solchen Sensors für einen Drehzahlregler für Elektromotoren von Elektrowerkzeugen hat jedoch bei rauhen Betriebsbedingungen erhebliche Nachteile, da eine feinfühlige insbesondere wegabhängige Regulierung dieser Sensoren nicht möglich ist.

Der Erfindung liegt die Aufgabe zugrunde, die zuvor genannten Nachteile zu vermeiden. Insbesondere soll bei Drehzahlreglern für Elektrowerkzeuge auf den Einsatz von Potentiometer als Stellglied möglichst verzichtet werden. Dabei soll ein weitgehend verschleißfreier Sensor als Stellglied zur Drehzahlregelung auch bei Elektrowerkzeugen zur Anwendung kommen, ohne die beschriebenen Nachteile beizubehalten.

Die Verwendung eines geeigneten Sensors mit einem zusätzlichen wegverstellbaren Stellglied ermöglicht einen völlig verschleißfreien Betrieb, der insbesondere gegen die Einflüsse von Abrieb und Staub resistent ist, so daß der Vorteil eines Sensors allgemein genutzt werden kann. Hierdurch bleibt das Stellglied in seinen technischen oder elektrischen Werten über die Lebensdauer konstant und wird nicht durch äußere Einflüsse beeinflußt. Die Verwendung eines speziellen Sensors mit Wegverstellung als Stellglied für einen Drehzahlregler hat weiterhin den Vorteil, daß die Fertigungstoleranzen minimiert werden können.

Weitere Einzelheiten und Vorteile der Erfindung sind in der nachfolgenden Beschreibung von Ausführungsbeispielen erläutert. Es zeigen
- Fig. 1: einen Drehzahlregler mit einem Drucksensor mit längsverschiebbarem Drücker,
- Fig. 2: einen Drehzahlregler nach dem Stellrad-Prinzip mit Sensor in Seitenansicht.

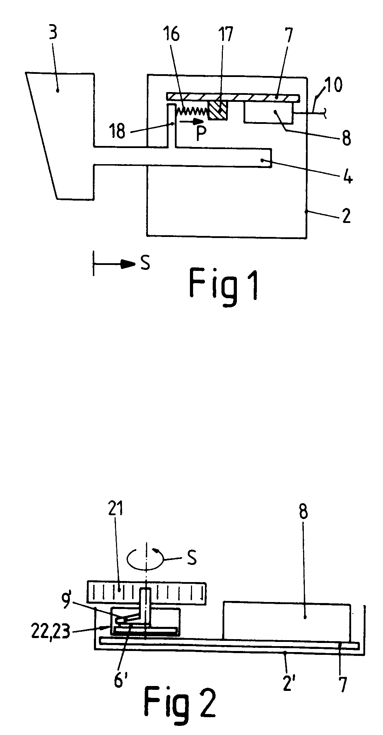

Gemäß den in den Figuren 1 und 2 dargestellten Ausführungsvarianten liefert der Drucksensor 17 Signale, wobei z. B. Spannung, Strom, Widerstand dem Weg des Drückers 4 indirekt über einen Druck p eine elektrische Ausgangsgröße zugeordnet wird;
Beim Ausführungsbeispiel nach Fig. 1 kommt ein Drucksensor 17 zum Einsatz. Dabei wirkt der Stößel 4 des Drückers 3 über eine Feder 16 auf den Drucksensor 17. Als Auswirkung der Drückerbewegung s entsteht dabei ein zuordenbarer Druck p am Drucksensor 17, an dessen Ausgang eine, dem Weg s zuordenbare elektrische Ausgangsgröße, z. B. Spannung oder Strom entsteht. Diese wird über die Leiterplatte 7 der Auswertelektronik 8 zugeführt. Die Kopplung des Stößels 4 mit der Feder 16 geschieht durch einen starren Ausleger 18. Dies hat zur Folge, daß eine wegbehaftete Betätigung des Drucksensors 17 erfolgt.

Im Ausführungsbeispiel nach Fig. 2 ist ein als Elektronikmodul ausgebildeter Drehzahlregler mit Stellrad in Seitenansicht dargestellt. Das Stellrad 21 legt eine kreisförmige Wegstrecke s zurück, was normalerweise über ein Potentiometer in eine elektrische Meßgröße, d. h. in einen veränderlichen Widerstandswert umgesetzt wird. Bei der vorliegenden Erfindung ist wiederum das herkömmliche Potentiometer durch einen Sensor 22 ersetzt, der über eine Feder angelenkt die Drehbewegung des Stellrads 21 in eine elektrische Meßgröße umsetzt.

Als Sensor wird ein Drucksensor verwendet, der über die Drehbewegung des Stellrades und über eine Feder angelenkt wird. Die Drehbewegung des Stellrads 21 in Fig. 2 tritt an die Stelle der Längsbewegung des Drückers 3 in Fig. 1.

Die Erfindung ist nicht auf die dargestellten und beschriebenen Ausführungsbeispiele beschränkt. Sie umfaßt auch vielmehr Abwandlungen im Rahmen der Schutzrechtsansprüche.

## Patentansprüche

1. Drehzahlregler für Elektromotoren von Elektrowerkzeugen mit einem als Drucksensorglied (17) ausgebildeten Stellglied zur Veränderung einer elektrischen Meßgröße, wobei dem Drucksensorglied (17) eine elektronische Schaltung (8) zur Drehzahlregelung entsprechend der elektrischen Meßgröße nachgeschaltet ist und wobei das Drucksensorglied (17) durch ein zusätzliches Stellglied im Sinne einer Veränderung der elektrischen Meßgröße des Drucksensorglieds (17) betätigt wird, dadurch gekennzeichnet, daß das zusätzliche Stellglied (16) mit dem Stößel (4) eines linear wegverstellbaren Drückers (3) oder mit einem kreisförmig wegverstellbaren Stellrad (21) derart gekoppelt ist, daß die Wegverschiebung (s) des Drückers (3) oder des Stellrades (21) über das zusätzliche Stellglied (16) auf das Drucksensorglied (17) zur Erzeugung eines der Wegverschiebung (s) zuordenbaren Drucks am Drucksensorglied (17) einwirkt, wodurch am Ausgang des Drucksensorglieds (17) wiederum die dem Druck zuordenbare elektrische Meßgröße entsteht.

2. Drehzahlregler nach Anspruch 1, dadurch gekennzeichnet, daß die am Ausgang des Drucksensorglieds (17) entstehende elektrische Meßgröße eine dem Druck proportionale Spannung oder ein dem Druck proportionaler Strom ist.

3. Drehzahlregler nach Anspruch 1 oder 2, dadurch gekennzeichnet, daß das zusätzliche Stellglied aus einer Feder (16), insbesondere Druckfeder, besteht.

4. Drehzahlregler nach Anspruch 3, dadurch gekennzeichnet, daß der Stößel (4) des wegverstellbaren Drückers (3) mit der Feder (16) durch einen starren Ausleger (18) gekoppelt ist.

## Claims

1. Speed regulating device for electric motors of electric tools, comprising a final actuating element constructed as pressure sensor element (17) for modifying an electric measured variable, wherein an electronic circuit (8) for regulating the speed according to the electric measured variable is connected behind the pressure sensor element (17) and wherein the pressure sensor element (17) is actuated by an additional actuating element in the sense of a change to the electrical measured variable of the pressure sensor element (17), characterized in that the additional actuating element (16) is coupled to the plunger (4) of a linearly displaceable pusher (3) or to a circularly displaceable regulator wheel (21) in such a manner that the displacement (s) of the pusher (3) or of the regulator wheel (21) acts via the additional actuating element (16) upon the pressure sensor element (17) to create a pressure on the pressure sensor element (17) that can be associated with the displacement (s), with the result that, at the output of the pressure sensor element (17), an electrical measured variable that can be associated with the pressure is produced.

2. Speed regulating device according to Claim 1, characterized in that the electrical measured variable produced at the output of the pressure sensor element (17) is a voltage proportional to the pressure or an electric current proportional to the pressure.

3. Speed regulating device according to Claim 1 or 2, characterized in that the additional actuating element consists of a spring (16), especially a compression spring.

4. Speed regulating device according to Claim 3, characterized in that the plunger (4) of the displaceable pusher (3) is coupled to the spring (16) by a rigid arm (18).

## Revendications

1. Régulateur de la vitesse de rotation pour des moteurs électriques d'outils électriques, comportant un organe de réglage, réalisé comme organe de détection de pression (17), pour modifier une grandeur de mesure électrique, un circuit électronique (8) pour le réglage de la vitesse de rotation de façon correspondant à la grandeur de mesure électrique étant disposé en aval de l'organe de détection de pression (17), et l'organe de détection de pression (17) étant actionné par un organe de réglage supplémentaire dans le sens d'une modification de la grandeur de mesure électrique de l'organe de détection de pression (17),
caractérisé en ce que l'organe de réglage supplémentaire (16) est couplé à la tige (4) d'un poussoir (3) linéairement déplaçable ou à une roue de réglage (21) déplaçable de façon circulaire, en ce que le déplacement (s) du poussoir (3) ou de la roue de réglage (21) agit, par l'intermédiaire de l'organe de réglage supplémentaire (16), sur l'organe de détection de pression (17) pour engendrer une pression, pouvant être associée au déplacement (s), sur l'organe de détection de pression (17), grâce à quoi, à la sortie de l'organe de détection de pression (17), on obtient à nouveau la grandeur de mesure électrique pouvant être associée à la pression.

2. Régulateur de vitesse de rotation selon la revendication 1,
caractérisé en ce que la grandeur de mesure électrique créée à la sortie de l'organe de détection de pression (17) est une tension proportionnelle à la pression ou un courant proportionnel à la pression.

3. Régulateur de vitesse de rotation selon la revendication 1 ou 2,
caractérisé en ce que l'organe de réglage supplémentaire est constitué d'un ressort (16), en particulier un ressort de pression.

4. Régulateur de vitesse de rotation selon la revendication 3,
caractérisé en ce que la tige (4) du poussoir déplaçable (3) est couplée au ressort (16) par un bras rigide (18).
